# EUROPÄISCHE PATENTSCHRIFT

(11) **EP 2 402 216 B1**
(45) Veröffentlichungstag und Bekanntmachung des Hinweises auf die Patenterteilung: **15.11.2017**
(21) Anmeldenummer: 11183549.2
(22) Anmeldetag: 08.09.2009
(51) Int. Cl.: B60R 11/04

(54) **Montagemodul**
Mounting module
Module de montage

(30) Priorität: 09.09.2008 DE 102008046454; 02.12.2008 DE 102008059918
(43) Veröffentlichungstag der Anmeldung: 04.01.2012
(62) Teilanmeldung aus: 09782736.4
(73) Patentinhaber: Huf Hülsbeck & Fürst GmbH & Co. KG, 42551 Velbert (DE)
(72) Erfinder: Ulomek, Peter, 42477 Radevormwald (DE); Weikert, Günther, 71134 Aidlingen (DE)
(74) Vertreter: Vogel, Andreas

(56) Entgegenhaltungen:
- DE-A1-102005 021 672
- DE-U1- 20 219 004
- FR-A1- 2 859 425
- FR-A1- 2 859 426

## Beschreibung

Die Erfindung betrifft ein Montagemodul an einem beweglichen Teil eines Kraftfahrzeuges, insbesondere an einer Heckklappe,

In der DE 10 2007 052 402.3 ist eine Vorrichtung mit einer Kamera offenbart, die beispielsweise an einer Heckklappe eines Kraftfahrzeuges befestigt werden kann, die zur Bilderfassung des Außenbereiches des Kraftfahrzeuges dient. Beispielsweise können derartige Kameras im Bereich des assistierten Einparkens von Kraftfahrzeugen zum Einsatz kommen. Die Kamera erzeugt für den Kraftfahrzeugfahrer auf einem Bildschirm innerhalb der Fahrzeugkabine ein Bild des Außenbereiches, insbesondere der Rückansicht des Kraftfahrzeuges, welches eine wesentliche Unterstützung für den Fahrer darstellt.

Es ist bekannt, derartige Kameras innerhalb eines Montagemoduls an diversen Fahrzeugstellen anzubringen, wie zum Beispiel an der Heckklappe des Kraftfahrzeuges.

Ein solches Montagemodul ist in der DE 10 2004 050 297 A1 offenbart.

Es ist Aufgabe der vorliegenden Erfindung, ein Montagemodul der genannten Art weiterzubilden wodurch die Funktionalität der Gesamtanordnung erweitert wird.

Zur Lösung dieser Aufgabe wird ein Montagemodul mit den Merkmalen des Anspruches 1 vorgeschlagen. In den abhängigen Ansprüchen sind bevorzugte Weiterbildungen ausgeführt.

Dazu ist erfindungsgemäß vorgesehen, dass das Montagemodul mit einem Gehäuse ausgeführt ist, an dem eine Kamera, die zur Bilderfassung des Außenbereiches des Kraftfahrzeuges dient, ein Betätigungselement zum Aktivieren eines mechanischen Schlosses des beweglichen Teils und ein bewegliches Schutzelement angeordnet sind, das zwischen einer Schließstellung und einer Offenstellung bewegbar ist. In der Offenstellung ist hierbei das Betätigungselement für den Benutzer frei zugänglich und es ist eine Bilderfassung des Außenbereiches durch die Kamera durchführbar. In der Schließstellung verdeckt das Schutzelement gleichzeitig das Betätigungselement sowie die Kamera. Erfindungsgemäß ist auch ein Beleuchtungselement vorgesehen, das am Schutzelement angeordnet ist. Die Vorteik dieser Anordnung Werden in weiteren Verlauf dieser Beschreibung dargelegt. Durch die Integration des Betätigungselementes innerhalb des Montagemoduls kann zum einen Bauraum innerhalb des Kraftfahrzeuges eingespart werden. Darüber hinaus verringert sich der Aufwand während des Montageprozesses, da in einem Schritt sowohl Kamera als auch Betätigungselement am beweglichen Teil des Kraftfahrzeuges durch den Monteur befestigt werden können. Darüber hinaus wird nicht nur die empfindliche Kamera mit ihrer Linse in der Schließstellung des Schutzelementes durch Umwelteinflüsse geschützt, sondern auch das Betätigungselement wird vollständig in der Schließstellung des Schutzelementes abgedeckt. Neben der Schutzwirkung vor Umwelteinflüssen, wie Hitze, Feuchtigkeit, Staub, etc. verhindert die Schließstellung des Schutzelementes, dass eine unbefugte Manipulation am Betätigungselement durch einen unberechtigten Dritten durchgeführt wird. Vorteilhafterweise ist das Schutzelement mit einer Außenfläche ausgestaltet, auf der ein Herstelleremblem oder dergleichen angebracht ist.

In einer möglichen Ausführungsform der Erfindung ist das Schutzelement um eine Achseverschwenkbar gelagert. Das Schutzelement wirkt als eine Art Klappe, die von der Schließstellung in die Offenstellung und umgekehrt um die Achse sich verschwenkt. Vorzugsweise ist ein Antrieb vorgesehen, der in Wirkverbindung mit dem Schutzelement steht. Hierbei ist es zum Einen denkbar, dass der Antrieb unmittelbar im oder am Montagemodul, insbesondere am oder im Gehäuse des Montagemoduls angeordnet ist. Ebenfalls ist es in einer alternativen Ausführungsform denkbar, dass ein Antrieb vorgesehen ist, der in Wirkverbindung mit dem Schutzelement steht, wobei der Antrieb zumindest teilweise am beweglichen Teil außerhalb und beabstandet zum Montagemodul, insbesondere zum Gehäuse des Montagemoduls angeordnet ist. In der letztgenannten Alternative kann somit der Antrieb vom Montagemodul ausgelagert sein, so dass vorteilhafterweise ein kompaktes, einen geringen Bauraum benötigendes Montagemodul bereitgestellt wird.

Besonders vorteilhaft ist, dass das Schutzelement an der der Kamera zugewandten Innenseite eine Dichtung aufweist, die in der Schließstellung des Schutzelementes auf der Kamera und/oder auf dem Montagemodul abdichtend aufliegt. Hierdurch wird wirkungsvoll erreicht, dass während der Schließstellung keine Schmutzpartikel, Feuchtigkeit, etc. sowohl zur Kamera als auch zum Betätigungselement gelangen können. In dieser genannten Stellung des Schutzelementes ist insbesondere die Linse der Kamera wirkungsvoll geschützt. Der Antrieb kann mit einem derartigen Mechanismus ausgeführt sein, dass in der Schließstellung des Schutzelementes eine gewisse Kraft auf das Montagemodul und/oder auf die Kamera wirkt, wodurch das Schutzelement wirksam in der Schließstellung gehalten ist. Während des Öffnungsvorganges hingegen löst sich das Schutzelement mit der Dichtung vom Montagemodul und/oder von der Kamera, ohne entlang der Kamera zu gleiten und eventuelle Verschleißspuren an der Objektivlinse der Kamera entstehen zu lassen.

In einer weiteren Alternative der Erfindung umfasst der Antrieb einen Bowdenzug, eine Schubstange, eine Drehstange und/oder ein Getriebe. Das Getriebe kann beispielsweise aus diversen Hebelelementen bestehen, die in Wirkverbindung mit dem Schutzelement stehen. Des Weiteren ist ein Zahnradgetriebe denkbar, welches für eine entsprechende Bewegung des Schutzelementes in seine jeweilige Stellung sorgt. In einer vorteilhaften Ausführungsform ist der Antrieb, der mit seinem Motor am beweglichen Teil außerhalb des Montagemoduls befestigt ist, mit einem Bowdenzug versehen, der mit einem Getriebeteil am Montagemodul befestigt ist, wobei das Getriebeteil wiederum in Wirkverbindung mit dem Schutzelement steht.

In einer bevorzugten Ausführung des erfindungsgemäßen Montagemoduls wirkt der Antrieb mit einem derartigen Mechanismus, insbesondere Getriebe zusammen, dass während der Bewegung von der Schließstellung in die Offenstellung das Schutzelement eine zweiphasige Bewegung ausführt. Der besondere Vorteil dieser Verbindung ist, dass bei der Bewegung von der Schließstellung in die Offenstellung das Schutzelement sich zunächst in einer ersten Bewegungsphase von der Kamera löst und entfernt, ohne dass eine schädliche Kontaktierung unmittelbar an der Kamera, insbesondere an ihrem Objektiv auftritt. Nachdem ein definierter Abstand nach der ersten Bewegungsphase zwischen dem Schutzelement und der Kamera vorliegt, kann eine zweite Bewegungsphase eingeleitet werden, die das Schutzelement in das Gehäuse seitlich zur Kamera verfährt, so dass eine Bilderfassung des Außenbereiches des Kraftfahrzeuges durch die Kamera durchgeführt werden kann.

In einer bevorzugten Ausführung weist die zweiphasige Bewegung eine derartige erste Bewegungsphase auf, bei der sich das Schutzelement von der Kamera entfernt, wobei insbesondere das Schutzelement sich im Wesentlichen in Aufnahmerichtung gleichzeitig bewegt. Vorzugsweise entspricht die Richtung der Bewegung des Schutzelementes während seiner ersten Bewegungsphase in etwa der Aufnahmerichtung der Kamera. Das bedeutet, dass sich das Schutzelement in Richtung des Außenbereiches des Kraftfahrzeuges bewegt, der als Bild über die Kamera erfasst werden soll. In einer vorteilhaften Ausführungsform kann sich das Schutzelement gleichzeitig über seine gesamte Fläche von der Kamera entfernen, in dem das Schutzelement zum Außenbereich des Kraftfahrzeuges sich abhebt. Die Bewegung des Schutzelementes während der ersten Bewegungsphase kann beispielsweise translatorisch sein. Ebenfalls ist es denkbar, dass das Schutzelement über eine Dreh- und/oder Schwenkbewegung im Wesentlichen in Aufnahmerichtung der Kamera sich von der Kamera entfernt, bevor die zweite Bewegungsphase eingeleitet wird.

Das Getriebe, das auf das Schutzelement wirkt, kann derart ausgeführt sein, dass sich das Schutzelement während der zweiten Bewegungsphase um eine zweite Achse verschwenkt, die ungleich der ersten Achse ist, um die sich das Schutzelement während der ersten Bewegungsphase bewegt. Vorteilhafterweise ist während der zweiten Bewegungsphase eine Bewegung des Schutzelementes um die erste Achse blockiert. Hierbei ist das Getriebe vorteilhafterweise derart ausgeführt, dass die erste Bewegungsphase und die zweite Bewegungsphase sequentiell ausgeführt werden. In einer weitere Ausführungsform können sich die beiden Bewegungsphasen auch überlappen bzw. können beide Bewegungsphasen zumindest teilweise gleichzeitig erfolgen, das bedeutet, dass bevor die erste Bewegungsphase beendet ist, bereits die zweite Bewegungsphase über das Getriebe zur Bewegung des Schutzelementes gestartet wird.

Ebenfalls ist es denkbar, dass der Antrieb ein Getriebe mit einem derartigen Hebelmechanismus aufweist, dass in Schließstellung des Schutzelementes ein mutwilliges Öffnen des Schutzelementes in Richtung der Offenstellung vom Außenbereich blockiert ist. In einer möglichen Ausführungsform ist das Getriebe mit einem Kniehebel ausgebildet, der verhindert, das das Schutzelement unberechtigterweise aus seiner Schließstellung geöffnet wird, um einen Zugang zur Kamera sowie zum Betätigungselement zu erhalten.

In Parkstellung des Kraftfahrzeuges, das bedeutet, wenn der Benutzer das Kraftfahrzeug verlassen und verriegelt hat, befindet sich das Schutzelement in seiner Schließstellung, wodurch das Betätigungselement und die Kamera zuverlässig geschützt sind. Das Betätigungselement kann hierbei ein elektrisches Schaltelement, wie ein Taster, Schalter, Piezoelement oder dergleichen sein. Das Schutzelement wird zweckmäßigerweise dann aus der Schließstellung in die Offenstellung bewegt, wenn der Benutzer sich berechtigterweise innerhalb des Kraftfahrzeuges befindet und den Rückwärtsgang eingelegt hat. Auf einem Display innerhalb des Kraftfahrzeuges wird der hintere Außenbereich des Kraftfahrzeuges durch die Kamera sichtbar gemacht, wobei das Schutzelement sich in der Offenstellung befindet und somit gleichzeitig das Betätigungselement vom Außenbereich zugängig ist. Ebenfalls ist es denkbar, das Montagemodul derart mit der Schließvorrichtung des Kraftfahrzeuges, insbesondere der Zentralverriegelung in Datenkommunikation zu stellen, dass bei einer Entriegelung der Schließvorrichtung gleichzeitig das Schutzelement in die Offenstellung verfährt. Somit hat der Benutzer Gelegenheit das Betätigungselement zu aktivieren, um etwaig das bewegliche Teil, insbesondere die Heckklappe zu öffnen. Vorzugsweise verbleibt das Schließelement nur einen definierten Zeitraum in der Offenstellung und verfährt automatisch wieder in die Schließstellung, falls das Betätigungselement nicht durch den Benutzer betätigt wurde. Die Kamera bleibt hingegen deaktiviert. Vorteilhafterweise ist das Montagemodul problemlos mit Schließvorrichtungen, insbesondere "Keyless-Entry-Systemen" kombinierbar.

In einer die Erfindung verbessernden Maßnahme kann am Gehäuse ein Schließzylinder angeordnet sein, der in Schließstellung des Schutzelementes ebenfalls verdeckt ist. Der Schließzylinder ist vorzugsweise mit dem mechanischen Schloss des beweglichen Teils in Wirkverbindung. In den Schließzylinder kann ein Notschlüssel eingeführt werden, falls die elektrische Versorgung des Kraftfahrzeuges, insbesondere des Montagemoduls aus etwaigen Gründen ausgefallen sein sollte. Mit Hilfe des Notschlüssels kann somit das bewegliche Teil manuell durch den Benutzer geöffnet werden, in dem das Schloss über den Schließzylinder entriegelt, insbesondere geöffnet wird.

Vorteilhafterweise ist ein Rückstellmittel, insbesondere ein Federelement vorgesehen, das auf das Schutzelement wirkt, wodurch eine Rückbewegung des Schutzelementes während der Bewegung von der Offenstellung in die Schließstellung sichergestellt ist. Ebenfalls ist es in einer weiteren Ausführungsform der Erfindung denkbar, einen Näherungssensor am Gehäuse des Montagemoduls anzuordnen, der den berechtigten Benutzer detektiert und somit eine Bewegung des Schutzelementes aus der Schließstellung in die Offenstellung auslösen kann. In einer möglichen Ausführungsform der Erfindung ist der Näherungssensor als kapazitiver Sensor ausgeführt.

Ebenfalls ist es denkbar, dass das Schutzelement einteilig als Deckel oder Klappe ausgestaltet ist, oder dass das Schutzelement mehrteilig, insbesondere als Lamellen- oder Zentral- oder Rollladenverschluss ausgestaltet ist.

In einer weiteren Ausführungsalternative des Montagemoduls kann das Schutzelement beheizbar ausgeführt sein. Beispielsweise können Heizelemente, insbesondere Heizdrähte innerhalb des Schutzelementes verlaufen, die für eine entsprechende Erwärmung des Schutzelementes sorgen. Falls bei niedrigen Temperaturen das Schutzelement beispielsweise am Gehäuse des Montagemoduls festgefroren sein sollte, kann über eine Erwärmung des Schutzelementes in kürzester Zeit diese Störsituation behoben werden.

Ebenfalls kann es sinnvoll sein, dass bei Erreichen der Offenstellung und/oder der Schließstellung des Schutzelementes ein Informationssignal aus dem Montagemodul in das Kraftfahrzeug gesendet wird. Über dieses Informationssignal erhält der Benutzer innerhalb des Kraftfahrzeuges eine Rückmeldung, inwieweit eine Offenstellung und/oder eine Schließstellung des Schutzelementes vorliegt. Diese Rückmeldung kann beispielsweise optisch, akustisch oder auch haptisch für den Benutzer erfolgen.

Des Weiteren kann es von Vorteil sein, das Schutzelement aus einem Material auszuführen, das transparent oder einseitig transparent ist oder dass das Schutzelement in zwei Zustände, in einen transparenten und einen nicht transparenten Zustand gebracht werden kann. Somit ist es ebenfalls denkbar, dass bei einem transparenten oder einseitig transparenten auch eine Bilderfassung des Außenbereiches durchführbar ist, wenn das Schutzelement sich in der Schließstellung befindet.

Ebenfalls ist es möglich, dass das Schutzelement an seiner der Kamera zugewandten Seite eine Linse aufweist, wobei insbesondere in Abhängigkeit von der Stellung des Schutzelementes unterschiedliche Aufnahmesichtweisen der Kamera erzeugbar sind. Das bedeutet, dass eine Bilderfassung des Außenbereiches auch in Zwischenstellungen, das bedeutet zwischen der Offenstellung und der Schließstellung des Schutzelementes möglich sind. In Abhängigkeit von der jeweiligen Position des Schutzelementes bewirkt die am Schutzelement angeordnete Linse, dass die Aüfnahmesichtweise der Kamera variiert werden kann. Da die Linse an der Innenseite des Schutzelementes angeordnet ist, wird hierdurch die Linse vom Außenbereich entsprechend geschützt.

Erfindungsgemäß, ist der Montagemodul mit einem Beleuchtungselement, das am Schutzelement angeordnet ist. Desweiteren kann zusätzlich am Gehaüse (10) des Montagemoduls ein Microfon vorgesehen sein. Alternativ oder zusätzlich kann das Schutzelement als solches als Beleuchtungselement ausgeführt sein. Das bedeutet, dass beispielsweise, während der Rückwärtsgang des Kraftfahrzeuges eingelegt ist, das Schutzelement aktiv als Lichtquelle Licht emittiert. Hierbei ist es denkbar, dass das Schutzelement mit einer OLED an seiner Außenfläche versehen ist, die insbesondere nicht transparent ist, und eine Bilderfassung des Außenbereiches durch die Kamera möglich ist, auch wenn das Schutzelement sich in der Schließstellung befindet.

Die Erfindung schließt ebenfalls mit ein, dass das Schutzelement zweiteilig ausgeführt sein kann, das bedeutet, dass ein erstes Schutzelement in eine Offenstellung und in eine Schließstellung bringbar ist, welches in der Schließstellung die Kamera verdeckt. Ein zweites Schutzelement ist ebenfalls in eine Schließstellung und eine Offenstellung bringbar, wobei es in der Schließstellung das Betätigungselement verdeckt. Beide Schutzelemente sind hierbei unabhängig voneinander durch den Antrieb bewegbar.

Vorteilhafterweise verfährt das Schutzelement automatisch in seine jeweilige Stellung. Das bedeutet, dass beispielsweise ab einer definierten Geschwindigkeit des Kraftfahrzeuges das Schutzelement aus seiner Offenstellung automatisch in seine Schließstellung verfährt. Ebenfalls ist es denkbar, dass das Schutzelement zeitgesteuert in seiner jeweiligen Stellung verbleibt. Eine weitere Alternative der Erfindung kann vorsehen, dass der Benutzer innerhalb des Kraftfahrzeuges manuell eine entsprechende Bewegung des Schutzelementes in seine Schließstellung und/oder in seine Offenstellung auslösen kann.

Ebenfalls kann es von Vorteil sein, dass das Schutzelement an seiner der Kamera zugewandten Seite ein Reinigungselement aufweist, das während der Bewegung des Schutzelementes in seine jeweilige Stellung die Kamera kontaktiert, wodurch etwaige Verschmutzungen an der Kamera entfernbar sind. Das Reinigungselement kann beispielsweise als eine Fließfläche ausgeführt sein, die an der Innenseite des Schutzelementes befestigt ist.

In einer bevorzugten Ausführung der Erfindung ist ein Abstandmesser am Schutzelement oder am Gehäuse angeordnet. Bei Einlegen des Rückwärtsganges wird der Abstandsmesser aktiviert und teilt dem Benutzer der Kraftfahrzeuges neben der Bilderfassung des Außenbereiches zusätzlich die Information mit, wie groß der Abstand zu den jeweiligen Gegenständen ist, die sich am Heckbereich befinden.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1a: eine rein schematische Ansicht des erfindungsgemäßen Montagemoduls mit einer Kamera, einem Betätigungselement und einem Schutzelement, das in der Schließstellung sich befindet,
- Figur 1b: die Vorrichtung gemäß Figur 1a, wobei das Schutzelement sich von der Kamera gelöst hat,
- Figur 1c: das Montagmodul gemäß Figur 1a, wobei sich das Schutzelement in der Offenstellung befindet,
- Figur 2a: eine weitere Ausführungsform des Montagemoduls gemäß Figur 1a,
- Figur 2b: das Montagemodul gemäß Figur 2a, wobei das Schutzelement sich von der Kamera entfernt hat,
- Figur 2c: das Montagemodul gemäß Figur 2a, wobei das Schutzelement sich in der Offenstellung befindet,
- Figur 3: eine schematische Darstellung des Antriebes, der für die entsprechende Bewegung des Schutzelementes sorgt,
- Figur 4: eine rein schematische Seitenansicht auf das Montagemodul, wobei das Schutzelement sich in der Offenstellung befindet,
- Figur 5: das Montagemodul gemäß Figur 4, wobei das Schutzelement sich in einer Stellung zwischen Schließstellung und Offenstellung befindet,
- Figur 6: das Montagemodul gemäß Figur 4, wobei das Schutzelement sich in der Schließstellung befindet,
- Figur 7: eine weitere Ausführungsform des Montagemoduls gemäß Figur 4 und
- Figur 8: eine weitere Ausführungsform des Montagemoduls gemäß Figur 4.

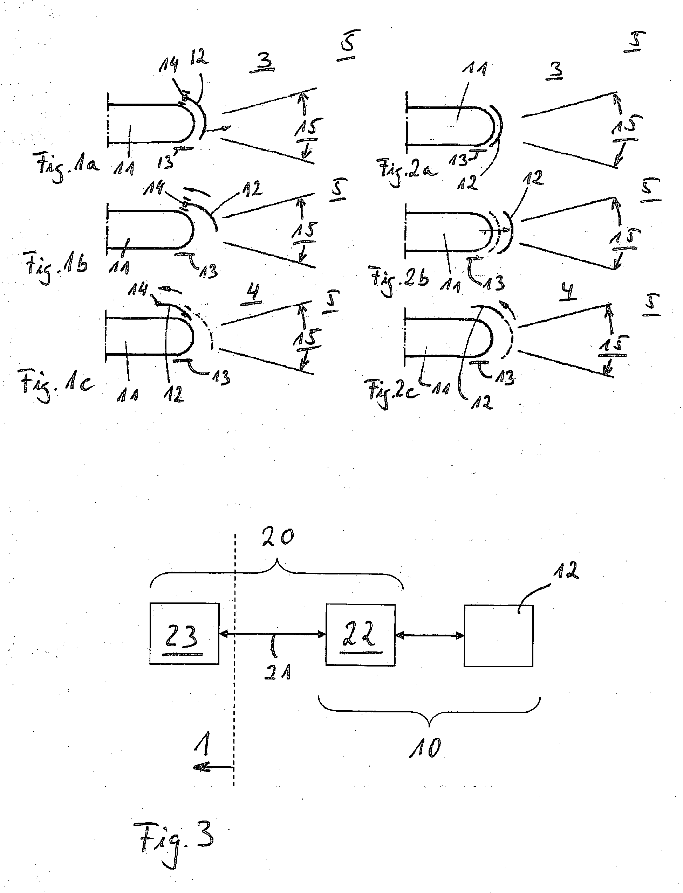

In den Figuren 1a bis 1c ist eine sehr vereinfachte Darstellung des erfindungsgemäßen Montagemoduls dargestellt, das an einem beweglichen Teil eines Kraftfahrzeuges, im vorliegenden Ausführungsbeispiel an der Heckklappe des Kraftfahrzeuges, die nicht explizit dargestellt ist, angebracht ist. Das Montagemodul weist eine Kamera 11, die zur Bilderfassung des Außenbereiches 5 des Kraftfahrzeuges dient, und ein Betätigungselement 13 zum Aktivieren eines mechanischen Schlosses, das an der Heckklappe entfernt vom Montagemodul angeordnet ist, auf.

Des Weiteren ist am Montagemodul ein bewegliches Schutzelement 12 angeordnet, das von einer Schließstellung 3, die in Figur 1a dargestellt ist, in eine Offenstellung 4 gemäß Figur 1c bewegbar ist. In der Schließstellung 3 befindet sich die Kamera 11 sowie das Betätigungselement 13, das als elektrisches Schaltelement ausgeführt ist, vom Außenbereich 5 abgeschlossen und unzugänglich hinter dem Schutzelement 12. Die Kamera 11 ist hierbei in eine Aufnahmerichtung 15 zur Bilderfassung des heckseitigen Außenbereiches 5 ausgerichtet. In der Offenstellung 4 des Schutzelementes 12 ist eine Bilderfassung der Kamera 11 durchführbar. Während der Bewegung von der Schließstellung 3 in die Offenstellung 4 führt das Schutzelement 12 eine zweiphasige Bewegung aus. Eine erste Bewegungsphase zeichnet sich durch eine Schwenkbewegung des Schutzelementes 12 um eine erste Achse 14 aus. Bei dieser ersten Bewegungsphase entfernt sich das Schutzelement 12 von der Kamera 11 sowie vom Betätigungselement 13 und bewegt sich im Wesentlichen in Aufnahmerichtung 15. Durch diese erste Bewegungsphase wird zunächst ein größerer Abstand zwischen dem Schutzelement 12 und der Kamera 11 sowie dem Betätigungselement 13 geschaffen. In einer daran anschließenden zweiten Bewegungsphase wird das Schutzelement 12 samt der ersten Achse 14 von dem Vorderbereich der Kamera 11 wegbewegt. In der Offenstellung 4 befindet sich das Schutzelement 12 vollständig und für den Benutzer nicht sichtbar innerhalb eines nicht dargestellten Gehäuses des Montagemoduls.

In den Figuren 2a bis 2c ist eine weitere Ausführungsvariante des erfindungsgemäßen Montagemoduls dargestellt, bei der die erste Bewegungsphase sich durch eine rein translatorische Bewegung des Schutzelementes 12 in Richtung der Aufnahmerichtung 15 kennzeichnet. Ausgehend von der Schließstellung 3 gemäß Figur 2a erfolgt über einen nicht dargestellten Antrieb eine translatorische Bewegung des Schutzelementes 12, wodurch sich der Abstand des Schutzelementes 12 zur Kamera 11 sowie zum Betätigungselement 13 vergrößert. Anschließend wird über die zweite Bewegungsphase die in Figur 2c dargestellt ist, das Schutzelement 12 aus dem Vorderbereich in einen hinteren Gehäusebereich des Montagemoduls wegbewegt.

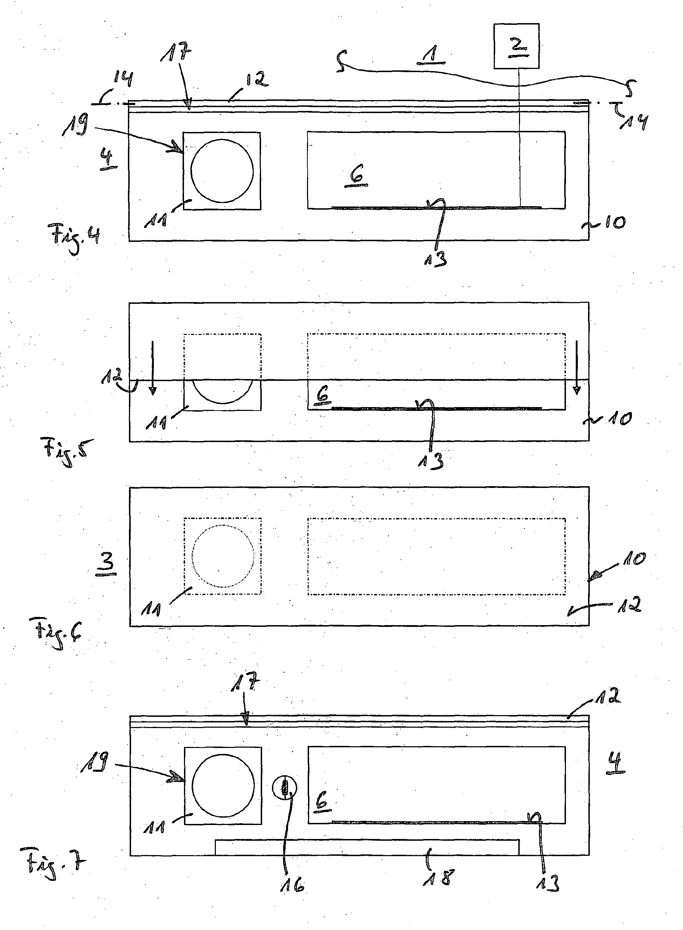

Das Schutzelement 12 gemäß der Figuren 1 und 2 ist über einen Antrieb in seine jeweilige Stellung 3, 4 bewegbar, wobei in einer Ausführungsform gemäß Figur 3 der Antrieb einen Elektromotor 23 aufweist, der über einen Bowdenzug 21 mit einem Getriebe 22 verbunden ist. Der Motor 23 ist außerhalb des Montagemoduls, welches im Einzelnen in den Figuren 4 bis 8 dargestellt ist, angeordnet, das bedeutet, dass im vorliegenden Ausführungsbeispiel gemäß Figur 3 der Motor 23 an der Heckklappe 1 des Kraftfahrzeuges befestigt ist. Über den flexiblen Bowdenzug 21 wird eine wirksame Verbindung zwischen dem Motor 23 und dem Getriebe 22 erzielt. Durch eine entsprechende Zugkraft kann das Getriebe 22 über den Bowdenzug 21 entsprechend in Bewegung gesetzt werden, wodurch das Schutzelement 12, welches in Wirkverbindung mit dem Getriebe 22 ist, eine entsprechende Bewegung in seine jeweilige Stellung 3, 4 erfährt:

Figur 4 zeigt ein Montagemodul, welches ein bewegliches Schutzelement 12 aufweist, das beispielsweise gemäß Figur 1 oder Figur 2 entsprechend bewegt werden kann. Selbstverständlich ist es denkbar, dass das Schutzelement 12 lediglich eine einphasige Bewegung durchführt, das bedeutet entlang einer Schwenkachse von einer Schließstellung in eine Offenstellung und umgekehrt bewegt werden kann. Das Montagemodul umfasst ein Gehäuse 10, welches eine Aufnahme 19 aufweist, innerhalb dieser die Kamera 11 befestigt ist. Das Gehäuse 10, welches als Kunststoffspritzgussteil ausgeführt ist, weist ferner eine spitzförmige Aufnahmeöffnung 17 auf, in der das Schutzelement 12 in seine Offenstellung 4 sich vollständig befindet. Seitlich zur Kamera 11 ist ein Innenraum 6 vorgesehen, innerhalb dessen sich ein Betätigungselement 13 zum Aktivieren eines mechanischen Schlosses 2 der Heckklappe 1 angeordnet ist. Das Betätigungselement 13 kann als elektrisches Schaltelement wie ein Taster, Schalter, Piezoelement oder auch als Näherungsschalter ausgeführt sein. Eine entsprechende Betätigung des Betätigungselementes 13 bewirkt, dass das Heckklappenschloss 2 entriegelt wird und der Benutzer die Heckklappe 1 öffnen kann.

Bei der Bewegung des Schutzelementes 12 aus seiner Offenstellung 4 gemäß Figur 4 in Richtung der Schließstellung 3 gemäß Figur 6, bewegt sich das Schutzelement 12 aus der schlitzförmigen Aufnahmeöffnung 17 des Gehäuses 10 und bedeckt während der Bewegungsphase den Innenraum 6 sowie die Kamera 11 (siehe Figur 5) bis schließlich das Schutzelement 12 seine Schließstellung 3 in Figur 6 erreicht. Im vorliegenden Ausführungsbeispiel liegt das Schutzelement 12 abdichtend am Gehäuse 10 des Montagemoduls an, so dass sowohl die Kamera 11 als auch das Betätigungselement 13 vor etwaigen Umwelteinflüssen wirkungsvoll geschützt sind.

Figur 7 zeigt eine weitere Ausführungsvariante des Montagemoduls gemäß Figur 4 bis Figur 6. Der wesentliche Unterschied bei dem Montagemodul gemäß Figur 7 ist, dass am Gehäuse 10 des Montagemoduls zusätzlich ein Schließzylinder 16 angeordnet ist, der in Wirkverbindung mit einem nicht explizit dargestellten Schloss der Heckklappe 1 steht. In den Schließzylinder 16 kann ein Notschlüssel eingeführt werden, falls eine elektrische Versorgung des Montagemoduls oder des Kraftfahrzeuges nicht vorliegen sollte. Über den Notschlüssel kann eine Entriegelung des Schlosses der Heckklappe 1 erzielt werden. Alternativ oder zusätzlich kann ein Näherungssensor 18 am Gehäuse 10 vorgesehen sein, der eine Annäherung des berechtigten Benutzers detektiert und somit eine entsprechende Aktivierung des Antriebes bewirkt, wodurch das Schutzelement 12 von seiner Schließstellung 3 in die Offenstellung 4 "automatisch" bewegt wird.

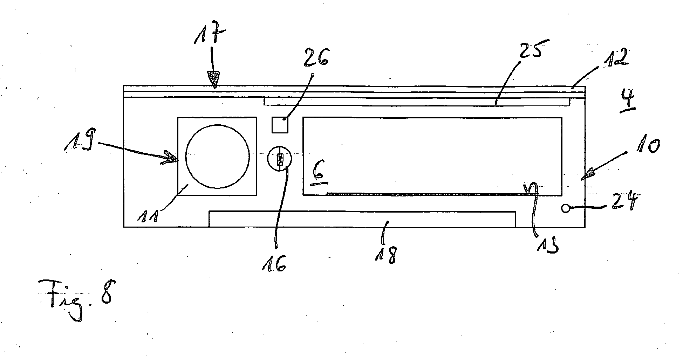

Figur 8 zeigt eine weitere Ausführungsform eines Montagemoduls, welches ein bewegliches Schutzelement 12 aufweist. Das Montagemodul weist sämtliche Merkmale des Montagemoduls auf, welches in Figur 7 offenbart ist. Des Weiteren sind am Gehäuse 10 des Montagemoduls zusätzlich ein Mikrofon 24, ein Beleuchtungselement 25 sowie ein Abstandsmesser 26 zur Parkhilfe vorgesehen.

Bei den Montagemodulen gemäß Figur 4 bis Figur 8 ist eine Kamera 11 vorgesehen, die unbeweglich im Gehäuse 10 angeordnet ist. Selbstverständlich ist es in einer weiteren Alternative, die nicht in den Figuren explizit dargestellt ist, denkbar, eine bewegliche Kamera 11 vorzusehen, die beispielsweise in der Schließstellung 3 des Schutzelementes 12 innerhalb des Gehäuses 10 eingefahren ist. In der Offenstellung 4 des Schutzelementes 12 wird die Kamera 11 entsprechend aus dem Gehäuse 10 zumindest teilweise ausgefahren. Die entsprechende Bewegung der Kamera 11 kann über den gleichen, identischen Antrieb erfolgen, der auch für die Bewegung des Schutzelementes 12 zuständig ist.

### Bezugszeichenliste

- 1: Bewegliches Teil, Heckklappe
- 2: Schloss
- 3: Schließstellung
- 4: Offenstellung
- 5: Außenbereich
- 6: Innenraum

- 10: Gehäuse
- 11: Kamera
- 12: Schutzelement
- 13: Betätigungselement
- 14: Achse
- 15: Aufnahmerichtung der Kamera 11
- 16: Schließzylinder
- 17: Aufnahmeöffnung
- 18: Näherungssensor
- 19: Aufnahme des Gehäuses 10

- 20: Antrieb
- 21: Bowdenzug
- 22: Getriebe
- 23: Motor
- 24: Mikrofon
- 25: Beleuchtungselement
- 26: Abstandsmesser

## Patentansprüche

1. Montagemodul an einem beweglichen Teil (1) eines Kraftfahrzeuges, insbesondere an einer Heckklappe (1), mit einem Gehäuse (10) umfassend
eine Kamera (11), die zur Bilderfassung des Außenbereiches eines Kraftfahrzeuges dient,
ein Betätigungselement (13) zum Aktivieren eines mechanischen Schlosses (2) des beweglichen Teils (1),
ein bewegliches Schutzelement (12), das zwischen einer Schließstellung (3) und einer Offenstellung (4) bewegbar ist, wobei
in der Offenstellung (4) das Betätigungselement (13) für den Benutzer frei zugänglich ist und eine Bilderfassung des Außenbereiches (5) durchführbar ist, und
in der Schließstellung (3) das Schutzelement (12) gleichzeitig das Betätigungselement (13) und die Kamera (11) verdeckt,
ein Beleuchtungselement vorgesehen ist, das am Schutzelement (12) angeordnet ist.

2. Montagemodul nach Anspruch 1,
**dadurch gekennzeichnet,**
**dass** das Schutzelement (12) als Beleuchtungselement ausgeführt ist.

3. Montagemodul nach Anspruch 1 oder 2,
**dadurch gekennzeichnet,**
**dass** das Schutzelement (12) um eine Achse (14) verschwenkbar gelagert ist.

4. Montagemodul nach einem der vorhergehenden Ansprüche,
**dadurch gekennzeichnet,**
**dass** ein Antrieb (20) vorgesehen ist, der in Wirkverbindung mit dem Schutzelement (12) steht, wobei der Antrieb (20) am Montagemodul, insbesondere am oder im Gehäuse (10) angeordnet ist.

5. Montagemodul nach einem der vorhergehenden Ansprüche,
**dadurch gekennzeichnet,**
**dass** ein Antrieb (20) vorgesehen ist, der in Wirkverbindung mit dem Schutzelement (12) steht, wobei der Antrieb (20) zumindest bereichsweise am beweglichen Teil (1) außerhalb und beabstandet zum Gehäuse (10) angeordnet ist.

6. Montagemodul nach einem der vorhergehenden Ansprüche,
**dadurch gekennzeichnet,**
**dass** am Gehäuse (10) ein Näherungssensor (18) vorgesehen ist, der insbesondere eine Annäherung des berechtigten Benutzers detektiert und somit eine entsprechende Aktivierung des Antriebes (20) bewirkt, wodurch das Schutzelement (12) von seiner Schließstellung (3) in die Offenstellung (4) bewegt wird.

7. Montagemodul nach einem der vorhergehenden Ansprüche,
**dadurch gekennzeichnet,**
**dass** bei einem Einlegen des Rückwärtsganges des Kraftfahrzeuges das Beleuchtungselement Licht emittiert, insbesondere dass das Schutzelement (12) ein Beleuchtungselement aufweist, das eine OLED ist.

8. Montagemodul nach einem der vorhergehenden Ansprüche,
**dadurch gekennzeichnet,**
**dass** die Kamera (11) unbeweglich oder beweglich am Gehäuse (10) angeordnet ist.

9. Montagemodul nach einem der vorhergehenden Ansprüche,
**dadurch gekennzeichnet,**
**dass** in der Schließstellung (3) des Schutzelementes (12) die Kamera (11) innerhalb des Gehäuses (10) eingefahren ist und in der Offenstellung (4) des Schutzelementes (12) die Kamera (11) aus dem Gehäuse (10) zumindest teilweise ausgefahren ist.

10. Montagemodul nach einem der vorhergehenden Ansprüche,
**dadurch gekennzeichnet,**
**dass** die Bewegung der Kamera (10) über den Antrieb (20) erfolgt, der auch für die Bewegung des Schutzelementes (12) zuständig ist.

11. Montagemodul nach einem der vorhergehenden Ansprüche,
**dadurch gekennzeichnet,**
**dass** der Antrieb (20) ein Getriebe (22) mit einem derartigen Hebelmechanismus aufweist, dass in Schließstellung (3) des Schutzelementes (12) ein mutwilliges Öffnen des Schutzelementes (12) in Richtung der Offenstellung (4) vom Außenbereich (5) blockiert ist.

12. Montagemodul nach einem der vorhergehenden Ansprüche,
**dadurch gekennzeichnet,**
**dass** am Gehäuse (10) ein Schließzylinder (16) angeordnet ist, der in Schließstellung (3) des Schutzelementes (12) verdeckt ist.

13. Montagemodul nach einem der vorhergehenden Ansprüche,
**dadurch gekennzeichnet,**
**dass** das Gehäuse (10) eine schlitzförmige Aufnahmeöffnung (17) für das Schutzelement (12) aufweist.

14. Montagemodul nach einem der vorhergehenden Ansprüche,
**dadurch gekennzeichnet,**
**dass** ein Federelement vorgesehen ist, das auf das Schutzelement (12) wirkt, wodurch eine Rückbewegung des Schutzelementes (12) von der Offenstellung (4) in die Schließstellung (3) sichergestellt ist.

15. Montagemodul nach einem der vorhergehenden Ansprüche,
**dadurch gekennzeichnet,**
**dass** das Schutzelement (12) einteilig als Deckel oder Klappe ausgestaltet ist, oder dass das Schutzelement (12) mehrteilig, insbesondere als Lamellen- oder Zentral- oder Rollladenverschluss ausgestaltet ist.

16. Montagemodul nach einem der vorhergehenden Ansprüche,
**dadurch gekennzeichnet,**
**dass** das Betätigungselement (13) als elektrisches Schaltelement, wie ein Taster, Schalter, Piezoelement oder dergleichen ausgeführt ist.

17. Montagemodul nach einem der vorhergehenden Ansprüche,
**dadurch gekennzeichnet,**
**dass** das Schutzelement (12) beheizbar ist.

18. Montagemodul nach einem der vorhergehenden Ansprüche,
**dadurch gekennzeichnet,**
**dass** ein Abstandsmesser (26) zur Parkhilfe am Schutzelement (12) oder am Gehäuse (10) angeordnet ist.

19. Montagemodul nach einem der vorhergehenden Ansprüche,
**dadurch gekennzeichnet,**
**dass** bei Erreichen der Offenstellung (4) und/oder der Schließstellung (3) des Schutzelementes (12) ein Informationssignal erzeugt wird, so dass der Benutzer innerhalb des Kraftfahrzeuges eine Rückmeldung bezogen auf die Stellung (3,4) des Schutzelementes (12) erhält.

## Claims

1. Mounting module on a moving part (1) of a vehicle, especially on a trunk lid (1) with a housing (10) comprising a camera (11) used for image acquisition of the outside area of a vehicle, an activation element (13) to activate a mechanical lock (2) of the moving part (1), a moving protective element (12), that can be moved between a closed position (3) and an open position (4), in which the activation element (13) is freely accessible to the user in the open position (4) and image acquisition of the outside area (5) can be conducted, and the protective element (12) simultaneously covers the activation element (13) and the camera (11) in the closed position (3).

2. Mounting module according to claim 1, **characterized in that** the protective element (12) is embodied as a lighting element.

3. Mounting module according to claim 1 or 2, **characterized in that** the protective element (12) is pivotably mounted about an axis (14).

4. Mounting module according to one of the preceding claims, **characterized in that** a drive (20) is provided, which is effectively connected to a protective element (12), wherein the drive (20) is arranged at the mounting module, especially arranged at or inside the housing (10).

5. Mounting module according to one of the preceding claims, **characterized in that** a drive (20) is provided, which is effectively connected to the protective element (12), wherein the drive (20) is arranged at least in areas on the moving part (1) outside and at a distance from housing (10).

6. Mounting module according to one of the preceding claims, **characterized in that** a proximity sensor (18) is provided on the housing (10), the proximity sensor (18) especially detecting the approaching of an authorized user and thus effecting a corresponding activation of the drive (20), whereby the protective element (12) is moved from its closed position (3) in the open position (4).

7. Mounting module according to one of the preceding claims, **characterized in that** the lighting element emits light when the reverse gear of the vehicle is engaged, especially that the protective element (12) has a lighting element, which is an OLED.

8. Mounting module according to one of the preceding claims, **characterized in that** the camera (11) is mounted immovable or movable at the housing (10).

9. Mounting module according to one of the preceding claims, **characterized in that** the camera (11) is retracted inside the housing (10) in the closed position (3) of the protective element (12) and that the camera (11) is at least partially extended from the housing (10) in the open position (4) of the protective element (12).

10. Mounting module according to one of the preceding claims, **characterized in that** the movement of the camera (11) is effected by a drive (20), wherein the drive (20) is also responsible for the movement of the protective element (12).

11. Mounting module according to one of the preceding claims, **characterized in that** the drive (20) includes a transmission (22) with a lever mechanism, so that a wantonly opening of the protective element (12) in the direction of the open position (4) is blocked from the outside area (5) in the closed position (3) of the protective element (12).

12. Mounting module according to one of the preceding claims, **characterized in that** a locking cylinder (16) is provided at the housing (10), where the locking cylinder (16) is covered in the closed position (3) of the protective element (12).

13. Mounting module according to one of the preceding claims, **characterized in that** the housing (10) has a slit like receptacle opening (17) for the protective element (12).

14. Mounting module according to one of the preceding claims, **characterized in that** a spring element is provided, which acts on the protective element (12) so that a return movement of the protective element (12) from the open position (4) to the closed position (3) is ensured.

15. Mounting module according to one of the preceding claims, **characterized in that** the protective element (12) is formed in one piece as a lid or flap, or that the protective element (12) is designed as several parts, especially as a lamella shutter or central shutter or roller shutter.

16. Mounting module according to one of the preceding claims, **characterized in that** the activation element (13) is designed as an electrical switching element, such as a push button, switch, piezo element, or the like.

17. Mounting module according to one of the preceding claims, **characterized in that** the protective element (12) is heatable.

18. Mounting module according to one of the preceding claims, **characterized in that** a range finder (26) for parking assistance is arranged on the protective element (12) or on the housing (10).

19. Mounting module according to one of the preceding claims, **characterized in that** an information signal is generated on reaching the open position (4) and/or the closed position (3) of the protective element (12), so that the user inside the vehicle receives a response based on the position (3, 4) of the protective element (12).

## Revendications

1. Module de montage sur une pièce mobile (1) d'un véhicule automobile, en particulier sur un hayon (1), avec un boîtier (10) comprenant
une caméra (11), destinée à la prise d'images de la zone extérieure d'un véhicule automobile,
un élément d'actionnement (13) destiné à activer une serrure mécanique (2) de la pièce mobile (1),
un élément de protection mobile (12), qui peut se déplacer entre une position fermée (3) et une position ouverte (4), sachant que
dans la position ouverte (4), l'utilisateur a librement accès à l'élément d'actionnement (13) et une prise d'images de la zone extérieure (5) peut être effectuée, et
dans la position fermée (3), l'élément de protection (12) masque à la fois l'élément d'actionnement (13) et la caméra (11),
il est prévu un élément d'éclairage, qui est disposé sur l'élément de protection (12).

2. Module de montage selon la revendication 1, **caractérisé en ce que** l'élément de protection (12) est réalisé sous forme d'élément d'éclairage.

3. Module de montage selon la revendication 1 ou 2, **caractérisé en ce que** l'élément de protection (12) est monté pivotant autour d'un axe (14).

4. Module de montage selon l'une des revendications précédentes, **caractérisé en ce qu'**un entraînement (20) est prévu, qui est fonctionnellement relié à l'élément de protection (12), l'entraînement (20) étant disposé sur le module de montage, en particulier sur ou dans le boîtier (10).

5. Module de montage selon l'une des revendications précédentes, **caractérisé en ce qu'**un entraînement (20) est prévu, qui est fonctionnellement relié à l'élément de protection (12), l'entraînement (20) étant disposé au moins en partie sur la pièce mobile (1), à l'extérieur et à distance du boîtier (10).

6. Module de montage selon l'une des revendications précédentes, **caractérisé en ce qu'**un détecteur de proximité (18) est prévu sur le boîtier (10), qui détecte notamment l'approche de l'utilisateur autorisé et produit ainsi une activation correspondante de l'entraînement (20), de sorte que l'élément de protection (12) est déplacé de sa position fermée (3) dans la position ouverte (4).

7. Module de montage selon l'une des revendications précédentes, **caractérisé en ce que** l'élément d'éclairage émet de la lumière lors de l'enclenchement de la marche arrière du véhicule automobile, en particulier **en ce que** l'élément de protection (12) présente un élément d'éclairage qui est une diode électroluminescente organique (OLED).

8. Module de montage selon l'une des revendications précédentes, **caractérisé en ce que** la caméra (11) est disposée de façon immobile ou mobile sur le boîtier (10).

9. Module de montage selon l'une des revendications précédentes, **caractérisé en ce que** la caméra (11) est rentrée à l'intérieur du boîtier (10) dans la position fermée (3) de l'élément de protection (12), et la caméra (11) est au moins partiellement sortie du boîtier (10) dans la position ouverte (4) de l'élément de protection (12).

10. Module de montage selon l'une des revendications précédentes, **caractérisé en ce que** le déplacement de la caméra (11) s'effectue au moyen de l'entraînement (20), qui est également responsable du déplacement de l'élément de protection (12).

11. Module de montage selon l'une des revendications précédentes, **caractérisé en ce que** l'entraînement (20) présente une transmission (22) dotée d'un mécanisme à leviers de telle sorte que, dans la position fermée (3) de l'élément de protection (12), toute tentative d'ouverture de l'élément de protection (12) en direction de la position ouverte (4) depuis la zone extérieure (5) est bloquée.

12. Module de montage selon l'une des revendications précédentes, **caractérisé en ce qu'**un cylindre de fermeture (16) est disposé sur le boîtier (10) et est masqué dans la position fermée (3) de l'élément de protection (12).

13. Module de montage selon l'une des revendications précédentes, **caractérisé en ce que** le boîtier (10) présente une ouverture réceptrice (17) en forme de fente pour l'élément de protection (12).

14. Module de montage selon l'une des revendications précédentes, **caractérisé en ce qu'**il est prévu un élément de ressort agissant sur l'élément de protection (12), ce qui garantit un mouvement de retour de l'élément de protection (12) de la position ouverte (4) dans la position fermée (3).

15. Module de montage selon l'une des revendications précédentes, **caractérisé en ce que** l'élément de protection (12) est réalisé d'un seul tenant sous forme de couvercle ou de volet, ou **en ce que** l'élément de protection (12) est réalisé en plusieurs parties, en particulier sous forme d'obturateur à lamelles ou d'obturateur central ou d'obturateur à volet roulant.

16. Module de montage selon l'une des revendications précédentes, **caractérisé en ce que** l'élément d'actionnement (13) est réalisé sous forme d'élément de commutation électrique, tel qu'un bouton poussoir, un commutateur, un élément piézoélectrique ou analogues.

17. Module de montage selon l'une des revendications précédentes, **caractérisé en ce que** l'élément de protection (12) peut être chauffé.

18. Module de montage selon l'une des revendications précédentes, **caractérisé en ce qu'**un télémètre (26) est disposé sur l'élément de protection (12) ou sur le boîtier (10) pour l'aide au stationnement.

19. Module de montage selon l'une des revendications précédentes, **caractérisé en ce qu'**un signal d'information est produit à l'atteinte de la position ouverte (4) et/ou de la position fermée (3) de l'élément de protection (12), de sorte que l'utilisateur à l'intérieur du véhicule automobile reçoit un retour d'information concernant la position (3, 4) de l'élément de protection (12).
